# EUROPÄISCHE PATENTSCHRIFT

(11) **EP 2 117 898 B1**
(45) Veröffentlichungstag und Bekanntmachung des Hinweises auf die Patenterteilung: **02.05.2018**
(21) Anmeldenummer: 08707595.8
(22) Anmeldetag: 07.02.2008
(51) Int. Cl.: B60T 17/02

(54) **VENTILEINRICHTUNG FÜR EINE DRUCKLUFTVERSORGUNGSEINRICHTUNG UND DRUCKLUFTVERSORGUNGSANLAGE**
VALVE DEVICE FOR A COMPRESSED AIR SUPPLY DEVICE AND COMPRESSED AIR SUPPLY SYSTEM
ENSEMBLE SOUPAPE POUR UN DISPOSITIF DE FOURNITURE D'AIR COMPRIMÉ ET SYSTÈME DE FOURNITURE D'AIR COMPRIMÉ ASSOCIÉ

(30) Priorität: 07.02.2007 DE 102007005987
(43) Veröffentlichungstag der Anmeldung: 18.11.2009
(73) Patentinhaber: KNORR-BREMSE Systeme für Nutzfahrzeuge GmbH, 80809 München (DE)
(72) Erfinder: HILBERER, Eduard, 68766 Hockenheim (DE)
(74) Vertreter: Mattusch, Gundula
(86) Internationale Anmeldenummer: PCT/EP2008/000937
(87) Internationale Veröffentlichungsnummer: WO 2008/095703

(56) Entgegenhaltungen:
- DE-A1- 19 835 638
- DE-A1- 19 936 283
- DE-A1-102004 021 242
- US-A- 5 678 900

## Beschreibung

Die Erfindung betrifft eine Ventileinrichtung für eine Druckluftversorgungsanlage eines Nutzfahrzeugs und eine Druckluftversorgungsanlage mit einer solchen Ventileinrrichtung.

Nutzfahrzeuge mit pneumatischen Komponenten benötigen eine Druckluftversorgungsanlage. Die Druckluft wird im Allgemeinen von einem Kompressor in eine Luftaufbereitungsanlage gefördert, wo die eingebrachte Luft in einer Filtereinheit gereinigt wird, um dann schließlich über ein Mehrkreisschutzventil ihrer Verwendung zugeführt zu werden, beispielsweise dem Bremssystem des Nutzfahrzeugs.

Nach dem Erreichen bestimmter Fördermengen beziehungsweise nach dem Ablauf bestimmter Zeiträume ist es erforderlich, die Filtereinheit zu reinigen. Zu diesem Zweck wird ein Regenerationsmagnetventil innerhalb der Luftaufbereitungsanlage in einer Weise geschaltet, dass Druckluft aus Vorratsbehältern, entweder den Vorratsbehältern der Betriebsbremskreise oder einem oder mehreren eigens dafür vorgesehenen Vorratsbehältern, durch das Regenerationsmagnetventil rückwärts durch die Filtereinheit strömt, um dann, beladen mit Feuchtigkeit und Fremdpartikeln aus der Filtereinheit, in die Atmosphäre abströmen zu können. Während dieser Regenerierungsphasen wird der Kompressor im Allgemeinen abgeschaltet beziehungsweise in eine Leerlaufphase überführt.

Allgemein ist man bestrebt, die Lufttrocknung möglichst effektiv und effizient zu gestalten, wobei dies insbesondere eine gute Ausnutzung des in der Lufttrocknerpatrone zur Verfügung stehenden Volumens voraussetzt. Dies betrifft auch die Regenerationsfähigkeit des Systems, wobei die der Lufttrocknerpatrone zum Zwecke der Regeneration zugeführte trockene Luft in ausreichender Menge zur Verfügung gestellt werden muss.

Die DE 1 98 35 638 A1 beschreibt eine Druckluftversorgungseinrichtung, die sowohl eine elektrisch als auch eine rein pneumatisch gesteuerte Regeneration ermöglicht. Der Erfindung liegt die Aufgabe zugrunde, eine Druckluftversorgungseinrichtung mit verbesserter Regenerationsfähigkeit und erhöhtem Integrationsgrad zur Verfügung zu stellen.

Diese Aufgabe wird mit den Merkmalen des unabhängigen Anspruchs 1 gelöst. Vorteilhafte Ausführungsformen der Erfindung sind in den abhängigen Ansprüchen angegeben.

Die Erfindung besteht in einer Ventileinrichtung für eine Druckluftversorgungsanlage, mit einem mit Druckluft beaufschlagbaren Steuerraum, einer den Steuerraum begrenzenden Steuerkolbenplatte, einem an der dem Steuerraum abgewandten Seite der Steuerkolbenplatte ansetzenden Steuerkolben, der in eine mit mindestens einem Druckluftanschluss versehene Ablassventilkammer eines Ablassventils hineinragt, und einem die Ablassventilkammer begrenzenden Ventilteller, der von einer Feder in Richtung eines Ventilsitzes mit Kraft beaufschlagbar und von dem Steuerkolben gegen die Kraft der Feder von dem Ventilsitz zum Öffnen des Ablassventils abhebbar ist, wobei der Steuerkolben und ein den Steuerkolben umgebendes Ventilgehäuse mindestens zwei Regenerationsventilkammern eines Regenerationsventils mit jeweils mindestens einem Druckluftanschluss definieren und die mindestens zwei Regenerationsventilkammern in Abhängigkeit der Position des Steuerkolbens entweder voneinander getrennt sind oder miteinander in Verbindung stehen. Auf diese Weise wird eine Ventileinrichtung zur Verfügung gestellt, die ein pneumatisch ansteuerbares Regenerationsventil aufweist. Hierdurch können im Vergleich zu Regenerationsmagnetventilen erheblich höhere Regenerationsluftraten gehandhabt werden, so dass insbesondere auch solche Filtereinheiten regeneriert werden können, die ein hohes Filtervermögen aufweisen. Dabei sind insbesondere Filtereinheiten zu nennen, die einen labyrinthartigen Aufbau aufweisen, so dass die zu trocknende Luft und ebenfalls die Regenerationsluft einen langen Weg durch die Filtereinheit zurücklegen. Die für derartige Filtereinheiten erforderliche Regenerationsluftmenge kann in einfacher Weise durch die erfindungsgemäße Ventileinrichtung zur Verfügung gestellt werden. Gleichzeitig ist die erfindungsgemäße Ventileinrichtung aufgrund einer Integration von Ablassventil und Regenerationsventil besonders nützlich. Es reicht ein einziger Steuerraum aus, um durch dessen Druckbeaufschlagung sowohl ein Umschalten des Regenerationsventils als auch ein Öffnen des Anblassventils zur Verfügung zu stellen.

Nützlicherweise ist vorgesehen, dass die Regenerationsventilkammern bei geschlossenem Ablassventil voneinander getrennt sind und bei geöffnetem Ablassventil miteinander in Verbindung stehen. Die Regeneration wird also immer dann automatisch eingeleitet, wenn das Ablassventil geöffnet wird. Umgekehrt findet jedes Mal, wenn das Ablassventil geöffnet wird, eine Regeneration statt.

Es kann vorgesehen sein, dass der Steuerkolben mindestens eine Einschnürung aufweist, die in einer ersten Position des Steuerkolbens vollständig in einer der Regenerationsventilkammern liegt und einer zweiten Position des Steuerkolbens eine Verbindung zwischen den mindestens zwei Regenerationsventilkammern schafft. Der Steuerkolben hat somit doppelte Funktion. Einerseits wirkt er als Stößel im Hinblick auf das Ablassventil; andererseits hat er über die Einschnürung ein Steuermittel, das die Regenerationsventilfunktion ermöglicht.

Ebenfalls kann vorgesehen sein, dass der durch seine Erstreckung zwischen der Steuerkolbenplatte und der Ablassventilkammer eine Achse definierende Steuerkolben mindestens einen Kanal mit mindestens zwei axial zueinander versetzten Kanalöffnungen aufweist, wobei die mindestens zwei axial zueinander versetzten Kanalöffnungen in einer ersten Position des Steuerkolbens in einer der Regenerationsventilkammern liegen und einer zweiten Position des Steuerkolbens in verschiedenen Regenerationsventilkammern liegen, so dass der Kanal eine Verbindung zwischen den mindestens zwei Regenerationsventilkammern schafft.

Die Erfindung ist in nützlicher Weise dadurch weitergebildet, dass der Steuerkolben von dem Ventilteller getrennt ist.

Ebenfalls kann vorgesehen sein, dass der Steuerkolben einstückig mit dem Ventilteller ausgebildet ist.

Weiterhin kann vorgesehen sein, dass die Ablassventilkammer mindestens einen zweiten Druckluftanschluss aufweist.

Die Erfindung ist in nützlicher Weise dadurch weitergebildet, dass die Ablassventilkammer mindestens einen zweiten Druckluftanschluss aufweist. An diesem zweiten Druckluftanschluss wird die mit dem Kompressor mittelbar oder unmittelbar in Verbindung stehende Förderleitung an das Ablassventil angeschlossen. Während der Förderphase durchströmt die Druckluft somit bei geschlossenem Ablassventil die Ablassventilkammer, während in der Regenerationsphase ein Abströmen der Luft aus der Ablassventilkammer ermöglicht wird.

Nützlicherweise ist vorgesehen, dass das Regenerationsventil und das Ablassventil in demselben Ventilgehäuse angeordnet sind. Dies stellt einen besonders Integrationsgrad zur Verfügung.

Die Erfindung besteht weiterhin in einer Druckluftversorgungsanlage mit einer Ventileinrichtung mit einem mit Druckluft beaufschlagbaren Steuerraum, einer den Steuerraum begrenzenden Steuerkolbenplatte, einem an der dem Steuerraum abgewandten Seite der Steuerkolbenplatte ansetzenden Steuerkolben, der in eine mit mindestens einem Druckluftanschluss versehene Ablassventilkammer eines Ablassventils hineinragt, und einem die Ablassventilkammer begrenzenden Ventilteller, der von einer Feder in Richtung eines Ventilsitzes mit Kraft beaufschlagbar und von dem Steuerkolben gegen die Kraft der Feder von dem Ventilsitz zum Öffnen des Ablassventils abhebbar ist, wobei der Steuerkolben und ein den Steuerkolben umgebendes Ventilgehäuse mindestens zwei Regenerationsventilkammern eines Regenerationsventils mit jeweils mindestens einem Druckluftanschluss definieren und die mindestens zwei Regenrationsventilkammem in Abhängigkeit der Position des Steuerkolbens entweder voneinander getrennt sind oder miteinander in Verbindung stehen und wobei der Steuerraum von einem Magnetventil ansteuerbar ist, der mindestens eine Druckluftanschluss der Ablassventilkammer mit einem Drucklufteingang einer Filtereinheit verbunden ist und die Regenerationsventilkammern mit jeweils einem Anschluss eines Rückschlagventils in Verbindung stehen, das mit einem Druckluftausgang der Filtereinheit verbunden ist.

Nützlicherweise ist vorgesehen, dass ein zweiter Druckluftanschluss der Ablassventilkammer mit einer Druckluftquelle verbunden ist.

Die Erfindung wird nun mit Bezug auf die begleitenden Zeichnungen anhand besonders bevorzugter Ausführungsformen beispielhaft erläutert.

Es zeigen:
- Figur 1: eine schematische Darstellung einer ersten Ausführungsform einer Druckluftversorgungsanlage;
- Figur 2: eine schematische Darstellung einer zweiten Ausführungsform einer Druckluftversorgungsanlage;
- Figur 3a: einen schematischen Axialschnitt durch eine erste Ausführungsform einer erfindungsgemäßen Ventileinrichtung sowie damit in Verbindung stehende Komponenten;
- Figur 3b: einen schematischen Axialschnitt durch eine zweite Ausführungsform einer erfindungsgemäßen Ventileinrichtung sowie damit in Verbindung stehende Komponenten;
- Figur 4: ein Flussdiagramm zur Erläuterung eines ersten Betriebsverfahrens einer Druckluftversorgungseinrichtung und
- Figur 5: ein Flussdiagramm zur Erläuterung eines zweiten Betriebsverfahrens einer Druckluftversorgungseinrichtung.

Bei der nachfolgenden Beschreibung der Zeichnungen bezeichnen gleiche Bezugszeichen gleiche oder vergleichbare Komponenten.

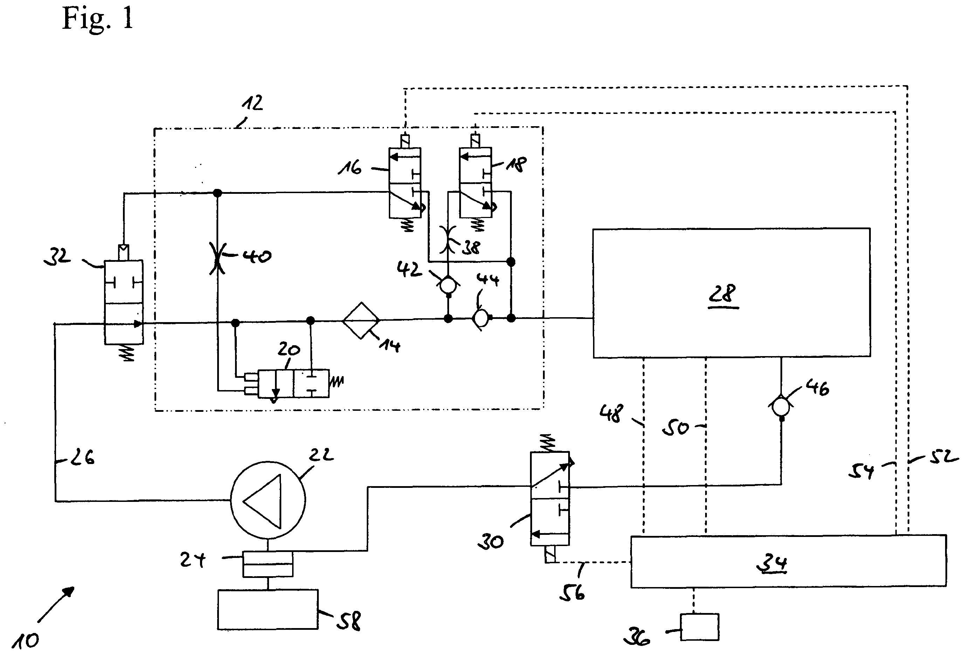

Figur 1 zeigt eine schematische Darstellung einer ersten Ausführungsform einer Druckluftversorgungsanlage. Die Druckluftversorgungsanlage 10 umfasst als wesentliche Komponenten eine Lufttrocknereinheit 12, eine Mehrkreisschutzventileinheit 28, einen Kompressor 22 mit Kupplung 24, eine Kompressorkupplungsschaltventileinheit 30 und eine in einer Förderleitung 26 zwischen dem Kompressor 22 und der Lufttrocknereinheit 12 angeordnete Förderleitungsabschaltventileinheit 32. Die Lufttrocknereinheit 12 umfasst pneumatisch und elektrisch ansteuerbare Komponenten, wobei aber die elektronische Steuereinheit 34, die unter anderem der Ansteuerung der in der Lufttrocknereinheit 12 vorgesehenen elektrisch ansteuerbaren Komponenten dient, extern angeordnet ist. Als Lufttrocknereinheit 12, die systematisch zwischen einer rein pneumatischen Lufttrocknereinheit und einer voll integrierten elektronischen Luftaufbereitungsanlage (EAC) anzusiedeln ist, wird eine solche Lufttrocknereinheit auch als Semitrockner bezeichnet. Die Lufttrocknereinheit 12 enthält eine erste elektrisch ansteuerbare Ventileinheit 16, die als 3/2-Wegeventil ausgebildet ist, eine zweite elektrisch ansteuerbare Ventileinheit 18, die ebenfalls als 3/2-Wegeventil ausgebildet ist, und eine pneumatisch ansteuerbare Ablassventileinheit 20, die als 2/2-Wegeventil ausgelegt ist. Weiterhin ist innerhalb der Lufttrocknereinheit 12 eine Filtereinheit 14 vorgesehen. Als weitere Komponenten sind zwei Drosseln 38, 40 sowie zwei Rückschlagventile 42, 44 zu nennen. Die Lufttrocknereinheit 12 steht ausgangsseitig mit einer Mehrkreisschutzventileinheit 28 in Verbindung, in der insbesondere Überströmventile vorgesehen sind, um die verschiedenen Druckluftverbraucherkreise gegeneinander abzusichern und eine vorgegebene Füllreihenfolge sicherzustellen. Die Mehrkreisschutzventileinheit 28 hat mehrere Druckluftausgänge, wobei nur der Druckluftausgang dargestellt ist, der über ein Rückschlagventil 46 zu einer als 3/2-Wegeventil ausgelegten Kompressorkupplungsschaltventileinheit 30 führt. Die Kompressorkupplungsschaltventileinheit 30 steht dann wiederum mit der Kompressorkupplung 24 in Verbindung, so dass die Kompressorkupplung 24 je nach Schaltzustand der Kompressorkupplungsschaltventileinheit 30 gekoppelt oder getrennt sein kann. Die elektronische Steuereinheit 34 erhält verschiedene Eingangssignale, beispielsweise von Drucksensoren, die in der Mehrkreisschutzventileinheit 28 eingebaut sind. Entsprechende Signalleitungen 48, 50 sind beispielhaft dargestellt. Die elektronische Steuereinheit 34 erhält weiterhin Temperaturinformationen von einem Temperatursensor 36. Über an Ausgangssignalanschlüssen der Steuereinheit 34 angeschlossene Signalleitungen 52, 54, 56 werden die erste elektrisch ansteuerbare Ventileinheit 16, die zweite elektrisch ansteuerbare Ventileinheit 18 und die Kompressorkupplungsschaltventileinheit 30 angesteuert.

Die in Figur 1 gezeigten Ventilstellungen liegen während einer normalen Förderphase der Druckluftversorgungsanlage vor. In dieser Förderphase koppelt die Kompressorkupplung 24 den Kompressor 22 mit dem Verbrennungsmotor 58 des Nutzfahrzeugs, so dass Druckluft über die Förderleitung 26 und die Förderleitungsabschaltventileinheit 32 in die Lufttrocknereinheit 12 gefördert wird. Die Druckluft durchströmt weiter die Filtereinheit 14 sowie das Rückschlagventil 44, um dann der Mehrkreisschutzventileinheit 28 zu geleitet zu werden, von wo aus die Druckluft den einzelnen Verbraucherkreisen zur Verfügung gestellt werden kann. Wird nun durch Druckmessung, beispielsweise vermittelt durch die Signalleitungen 48, 50, festegestellt, dass eine Abschaltdruckschwelle erreicht ist, so veranlasst die Steuereinheit 34 ein Umschalten der Kompressorkupplungsschaltventileinheit 30. Hierdurch wird ein Steuereingang der Kompressorkupplung 24 über das Rückschlagventil 46 mit einem Druckluftausgang des Mehrkreisschutzventils 28 verbunden, so dass ein Trennen der Kompressorkupplung 24 erfolgt. Die Druckluftversorgungsanlage tritt somit in einen Energiespar-Betriebszustand ein. Weiterhin kann durch Umschalten der ersten elektrisch ansteuerbaren Ventileinheit 16 innerhalb der Lufttrocknereinheit 12 veranlasst werden, dass die Ablassventileinheit 20 öffnet. Gleichzeitig wird durch das Umschalten der ersten elektrisch ansteuerbaren Ventileinheit 16 aber auch die Förderleitungsabschaltventileinheit 32 umgeschaltet, so dass die Förderleitung 26 von der Lufttrocknereinheit 12 getrennt wird. Folglich bleibt der Druck in der Förderleitung 26 trotz geöffnetem Ablassventil 20 erhalten. Ausgehend von diesem Zustand kann bei Bedarf eine Regeneration der Filtereinheit 14 erfolgen, indem nämlich die zweite elektrisch ansteuerbare Ventileinheit 18 der Lufttrocknereinheit 12 umgeschaltet wird. Ein Umschalten dieser Ventileinheit 18 stellt eine Umgehung des Rückschlagventils 44 über das Rückschlagventil 42 zur Verfügung, so dass Druckluft aus den Verbraucherkreisen über das Mehrkreisschutzventil 28, die zweite elektrisch ansteuerbare Ventileinheit 18, das Rückschlagventil 42, die Filtereinheit 14 und das Ablassventil 20 abströmen kann. Ein weiterer Betriebszustand kann in Abhängigkeit der von dem Temperatursensor 36 ermittelten Temperatur eingenommen werden. Um zu verhindern, dass die in der Förderleitung 26 vorhandene feuchte Druckluft zum Einfrieren der Förderleitung und/oder der Förderleitungsabschaltventileinheit 32 führt, ist bei niedrigen Temperaturen diese Druckluft von Zeit zu Zeit zu erneuern. Dies wird dadurch erreicht, dass trotz fehlendem Druckluftbedarf der Kompressor 22 in seine Förderphase überführt und die Förderleitungsabschaltventileinheit 32 in ihre Durchlassstellung überführt werden. Da das Ablassventil 20 in diesem Zustand zwangsläufig aufgrund seiner parallelen Ansteuerung zur Förderleitungsabschaltventileinheit 32 geschlossen ist, fördert der Kompressor 22 unter Erhöhung des Systemdrucks. Folglich geht während dieser kurzzeitigen Erneuerung des Förderleitungsvolumens keine Druckluft verloren. Im Zusammenhang mit der Ausführungsform gemäß Figur 1 ist aber zu erwähnen, dass bei dem Eintritt in die Nichtförderphase aufgrund des damit einhergehenden Umschaltens der Ablassventileinheit 20 in jedem Fall das Luftvolumen zwischen der Förderleitungsabschaltventileinheit 32 und dem Rückschlagventil 44 drucklos wird; insbesondere geht also der in der Filtereinheit 14 gespeicherte Druck verloren.

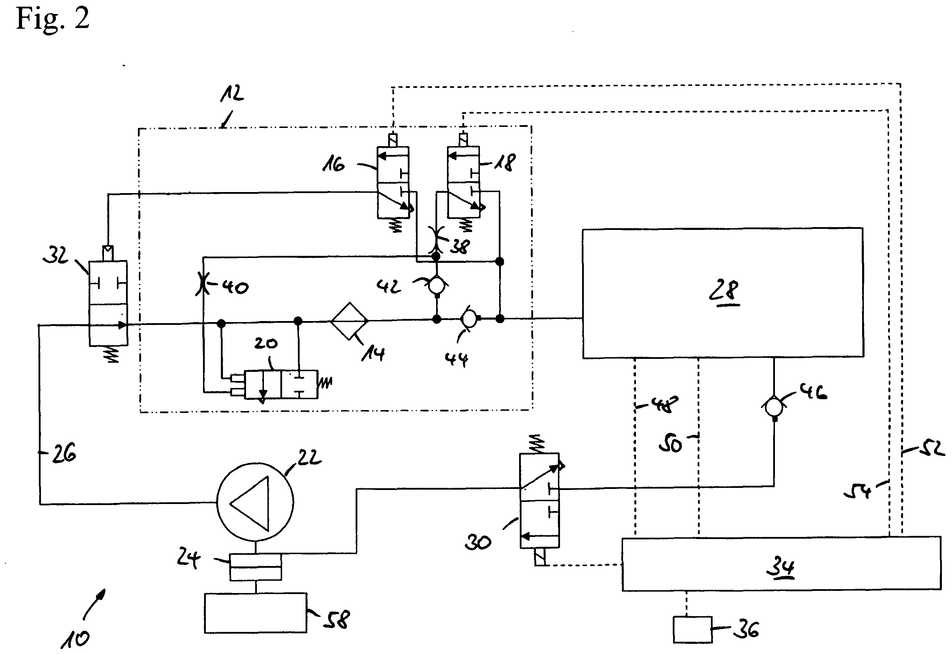

Figur 2 zeigt eine schematische Darstellung einer zweiten Ausführungsform einer Druckluftversorgungsanlage. Die hier dargestellte Druckluftversorgungsanlage 10 entspricht in vielen Einzelheiten der im Zusammenhang mit Figur 1 beschriebenen Anlage. Lediglich die pneumatische Ansteuerung der Ablassventileinheit im Hinblick auf die elektrisch ansteuerbaren Ventileinheiten 16, 18 ist unterschiedlich. Die Ablassventileinheit 20 wird gemäß Figur 2 nämlich durch die zweite elektrisch ansteuerbare Ventileinheit 18 geschaltet, das heißt stets im Zusammenhang mit einer Regeneration der Filtereinheit 14. Dies hat im Vergleich zu der Anlage gemäß Figur 1 den Vorteil, dass in der Nichtförderphase nicht nur das Druckluftvolumen in der Förderleitung 26 erhalten bleibt, sondern auch das Druckluftvolumen das zwischen der Förderleitungsabschaltventileinheit 32 und dem Rückschlagventil 44 gespeichert ist. Erst wenn einer Regeneration durch Umschalten der zweiten elektrisch ansteuerbaren Ventileinheit 18 eingeleitet wird, erfolgt ein Öffnen des Ablassventils 20, und es findet der in diesem Fall erwünschte Druckverlust statt. Ist das Volumen in der Förderleitung 26 aufgrund niedriger Temperaturen zu erneuern, so muss die Förderleitungsabschaltventileinheit 32 in ihre geöffnete Stellung überführt werden, der Kompressor 22 muss in Betrieb genommen werden und es ist erforderlich, das Ablassventil 20 durch umschalten der zweiten elektrisch ansteuerbaren Ventileinheit 18 zu schalten. Daher kommt es unweigerlich zu einer kurzzeitigen Regeneration, auch wenn dies eventuell gar nicht erforderlich ist. Eine solche kurzzeitige Regeneration kann aber in Kauf genommen werden, da durch die Entkopplung der Schaltvorgänge der Förderleitungsabschaltventileinheit 32 und der Ablassventileinheit 20 eine beträchtliche Einsparung von Druckluft während der Nicht-Förderphase erzielbar ist.

Bei der Ausführungsform gemäß Figur 2 erfüllt die Förderleitungsabschaltventileinheit 32 insbesondere während der Regenerationsphasen der Druckluftversorgungsanlage 10 ihren Zweck. Dann wird nämlich das Ablassventil 20 geöffnet, was ohne Förderleitungsabschaltventileinheit 32 zu einem Druckverlust in der Förderleitung 26 führen würde. Es ist also denkbar, die Förderleitungsabschaltventileinheit 32 erst dann in ihren die Förderleitung 26 sperrenden Zustand zu überführen, wenn eine Regeneration ansteht oder eingeleitet wird, denn außerhalb der Regenerationsphasen ist der Druckpfad zwischen dem Kompressor 22 und dem Rückschlagventil 44 abgeschlossen. Demnach ist es sogar möglich, auf die erste elektrisch ansteuerbare Ventileinheit 16 ganz zu verzichten und auch die Förderleitungsabschaltventileinheit 32 über die zweite elektrische ansteuerbare Ventileinheit anzusteuern. In diesem Fall würde der Übergang aus der Förderphase in die Nicht-Förderphase ausschließlich dadurch herbeigeführt, dass die Kompressorkupplungsschaltventileinheit 30 umgeschaltet würde, um so den Kompressor 22 außer Betrieb zu setzen. Insbesondere bliebe die Förderleitungsabschaltventileinheit 32 geöffnet. Erst wenn eine Regeneration stattfinden soll, wird die zweite elektrisch ansteuerbare Ventileinheit 18 umgeschaltet, was ein Absperren der Förderleitung 26 durch die Förderleitungsabschaltventileinheit 32 und ein Öffnen des Ablassventils 20 zur Folge hätte.

In Figur 2 schließt die Steuerdruckverbindung zum Ablassventil 20 zwischen der Drossel und dem Rückschlagventil 42 an. Es ist ebenso möglich, dass diese Verbindung zwischen der Drossel 38 und der Ventileinheit 18 angeordnet ist.

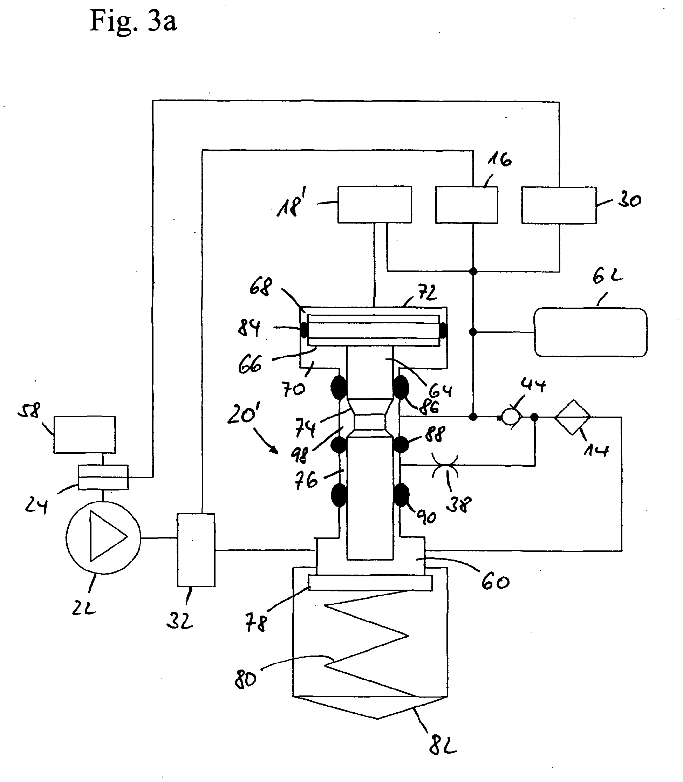

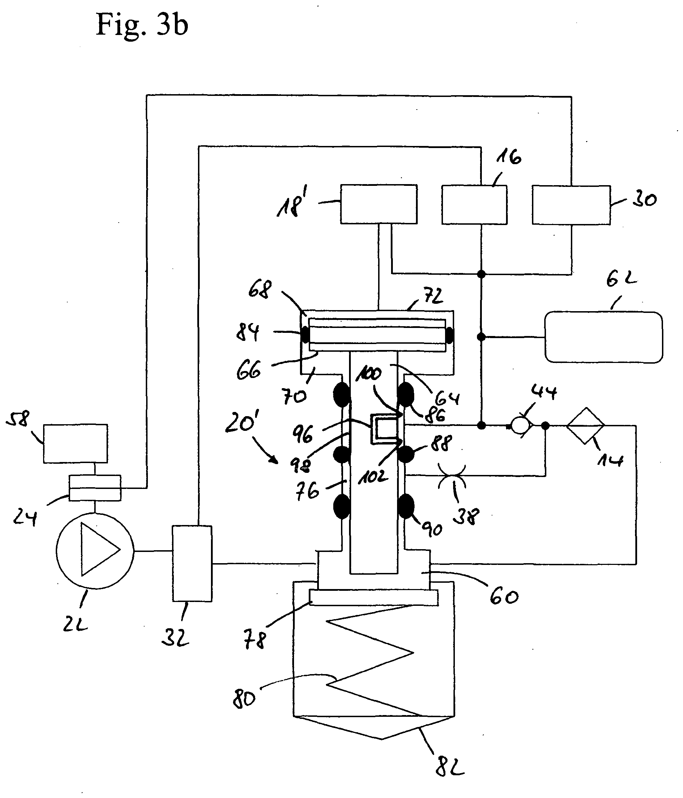

Figur 3a zeigt einen schematischen Axialschnitt durch eine erste Ausführungsform einer erfindungsgemäßen Ventileinheit, die im Zusammenhang mit der vorliegenden Erfindung vorteilhaft zum Einsatz kommen kann. Mit dem hier dargestellten Ablassventil 20' lassen sich die Ablassfunktion und die Bereitstellung eines Regenerationsluftpfades in besonderer Weise kombinieren. Im Hinblick auf die Schaltlogik entspricht die in Figur 3 dargestellte Schaltung derjenigen aus Figur 2, das heißt die Ablassfunktion und die Regenerationsfunktion sind zwingend miteinander gekoppelt, während das Umschalten der Förderleitungsabschaltventileinheit 32 hiervon vollkommen unabhängig erfolgen kann. Im dargestellten Schaltzustand kann eine Förderung von Druckluft von dem Kompressor 22 über die Förderleitungsabschaltventileinheit 32 erfolgen. Die so geförderte Druckluft durchströmt eine Ventilkammer 60 der Ablassventileinheit 20' und von dort über die Filtereinheit 14 und das Rückschlagventil 44 zu den Verbrauchern, die hier durch einen Druckluftbehälter 62 symbolisiert sind, wobei selbstverständlich noch eine Mehrkreisschutzventileinrichtung zwischengeschaltet sein kann. Der stromabwärts vom Rückschlagventil 44 vorliegende Systemdruck kann dann von der Kompressorkupplungsschaltventileinheit 30, der ersten elektrisch ansteuerbaren Ventileinheit 16 und der zweiten elektrisch ansteuerbaren Ventileinheit 18' zur Bereitstellung von Steuerdrücken für die Kompressorkupplung 24, die Förderleitungsabschaltventileinheit 32 und die Ablassventileinheit 20' genutzt werden. Die Ablassventileinheit 20' umfasst einen Steuerkolben. Eine endständige Steuerkolbenplatte 66 trennt einen mit der zweiten elektrisch ansteuerbaren Ventileinheit 18' verbundenen Steuerraum 68 mittels einer Dichtung 84, die mit einem Ventilgehäuse 72 zusammenwirkt von einem Rückraum 70. Der Rückraum 70 enthält eine nicht dargestellte Entlüftungsöffnung, um ein unbehindertes Verschieben des Steuerkolbens 64 zu gestatten. Der Steuerkolben 64 weist weiterhin eine Einschnürung 74 auf, wobei der Steuerkolben auf beiden Seiten der Einschnürung 74 mittels Dichtungen 86, 88 gegen die benachbarten, den Steuerkolben 64 umgebenden Räume abgedichtet ist. Die die Einschnürung 74 umgebende Ventilkammer ist als erste Regenerationsventilkammer 98 somit gegen den Rückraum 70 der Steuerkolbenplatte 66 sowie gegen eine zweite Regenerationsventilkammer 76 abgedichtet. Diese zweite Regenerationsventilkammer 76 ist von der bereits erwähnten Ventilkammer 60 mittels einer weiteren Dichtung 90 getrennt. Die Ventilkammer 60 wird durch einen Ventilteller 78 begrenzt, der durch eine Feder 80 auf einen Ventilsitz gepresst wird. Auf diese Weise dichtet der Ventilteller 78 die Ventilkammer 60 gegen einen Ablass 82 ab. Insgesamt enthält das Ablassventil 20' somit fünf Dichtungen, nämlich den mit dem Ventilteller 78 zusammenwirkenden Ventilsitz sowie die als O-Ringe realisierten Dichtungen 84, 86, 88, 90, die mit dem Ventilgehäuse 72 zusammenwirken und Steuerraum 68, Rückraum 70, erste Regenerationsventilkammer 98, zweite Regenerationsventilkammer 76 und Ventilkammer 60 gegeneinander abdichten. In dem in Figur 3 dargestellten Schaltzustand entlüftet die zweite elektrisch ansteuerbare Ventileinheit 18' den Steuerraum 68. Der Ventilteller 78 dichtet die Ventilkammer 60 gegen den Ablass 82 ab, und die Dichtung 88 dichtet den Bereich stromabwärts des Rückschlagventils 44, dass heißt die Druckluftverbraucherseite, gegen den mit einer Drossel 38 versehenen Luftpfad zur Filtereinheit 14 ab. Wird die zweite elektrisch ansteuerbare Ventileinheit 18 nun angesteuert, so dass der Steuerraum 38 belüftet wird, verschiebt die den Steuerkolben 64. Das hat zur Folge, dass der Steuerkolben einerseits den Ventilteller 78 von dem Ventilsitz abhebt, so dass die Ventilkammer 60 mit dem Ablass 82 verbunden ist, und das andererseits der die Einschnürung 74 umgebende Raum nun eine Verbindung zwischen der Verbraucherseite, dass heißt im Bereich stromabwärts des Rückschlagventils 44 und der Filtereinheit 14 zur Verfügung stellt. Da der Ablass in diesem Zustand geöffnet ist, kann ein Rückströmen von Druckluft von der Verbraucherseite über die Filtereinheit zum Ablass erfolgen. Das Ablassventil 20' kombiniert insofern die Ablassfunktion mit einer 2/2-Wegeventilfunktion zur Bereitstellung eines Regenerationsluftpfades. Gemäß dem vorliegenden Ausführungsbeispiel ist diese 2/2-Wegeventilfunktion durch eine Einschnürung realisiert.

Figur 3b zeigt einen schematischen Axialschnitt durch eine zweite Ausführungsform einer erfindungsgemäßen Ventileinrichtung sowie damit in Verbindung stehende Komponenten. Die in Figur 3b dargestellte Ventileinrichtung unterscheidet sich von der in Figur 3a dargestellten Ventileinrichtung dadurch, dass anstelle einer Einschnürung 74 ein Kanal 96 vorgesehen ist. Beide Öffnungen 100, 102 des Kanals 96 liegen im dargestellten Schaltzustand innerhalb der ersten Regenerationsventilkammer 98, während durch Druckbeaufschlagen des Steuerraums 68 der Steuerkolben 64 in der Weise verschoben wird, dass der Kanal 96 beide Regenerationsventilkammern 76, 98 miteinander verbindet, um auf diese Weise einen Regenerationsluftpfad zu vervollständigen.

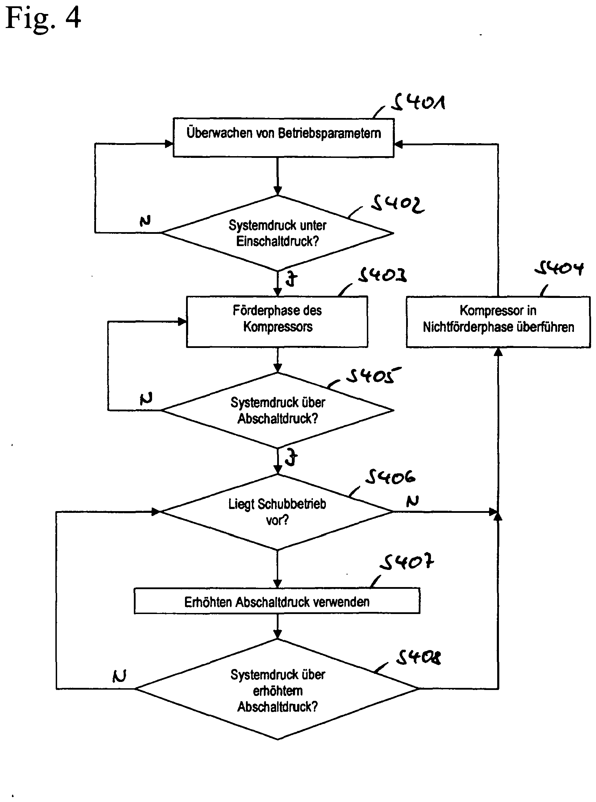

Figur 4 zeigt ein Flussdiagramm zur Erläuterung eines ersten Betriebsverfahrens einer Druckluftversorgungseinrichtung. Gemäß Schritt 401 werden Betriebsparameter des Nutzfahrzeugs überwacht, unter anderem der Systemdruck der Druckluftversorgungsanlage und das Vorliegen einer Schubphase. In Schritt S402 wird ermittelt, ob der Systemdruck unterhalb einer vorgegebenen Einschaltdruckschwelle liegt. Ist dies nicht der Fall, so wird die Überwachung der Betriebsparameter gemäß Schritt S401 fortgesetzt. Liegt der Systemdruck hingegen unterhalb der Einschaltdruckschwelle, so wird gemäß Schritt S403 verlasst, dass der Kompressor fördert. In Schritt S405 wird dann ermittelt, ob der Systemdruck oberhalb einer Abschaltdruckschwelle liegt, bei der im Normalfall der Förderzustand beendet wird. Liegt der Systemdruck noch unterhalb der Abschaltdruckschwelle, so wird die Förderphase des Kompressors gemäß Schritt S403 aufrechterhalten. Ist die Abschaltdruckschwelle überschritten, so wird nicht sogleich abgeschaltet, sondern es wird viel mehr in Schritt S406 überprüft, ob sich das Nutzfahrzeug in einer Schubphase befindet. Erst wenn festgestellt wird, dass keine Schubbetriebsphase vorliegt, so wird in Schritt S404 der Kompressor in eine Nichtförderphase überführt, woraufhin gemäß Schritt S401 das Überwachen von Betriebsparametern fortgesetzt wird. Liegt jedoch eine Schubbetriebsphase vor, so wird gemäß Schritt S407 die Abschaltdruckschwelle auf einen höheren Wert gesetzt, so dass die Förderphase des Kompressors länger anhalten kann. In Schritt S408 wird dann geprüft, ob der Systemdruck über der erhöhten Abschaltdruckschwelle liegt. Ist dies nicht der Fall, so wird mit der bereits beschriebenen Überprüfung, ob Schubbetrieb vorliegt, gemäß Schritt S406 fortgefahren. Erst wenn in Schritt 408 ermittelt wird, dass der Systemdruck sich nun oberhalb des erhöhten Abschaltdruckes befindet, wird gemäß Schritt S404 der Kompressor in seine Nichtförderphase überführt, und es wird in Schritt S401 die Überwachung von Betriebsparametern fortgesetzt.

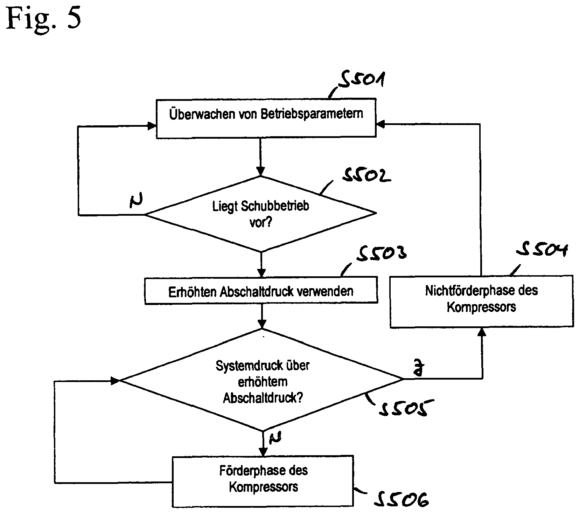

Figur 5 zeigt ein Flussdiagramm zur Erläuterung eines zweiten Betriebsverfahrens einer Druckluftversorgungseinrichtung. Während bei dem im Zusammenhang mit Figur 4 beschriebenen Verfahren der Schubbetrieb nur dann in verbesserter Weise ausgenutzt wird, wenn ohnehin bereits eine Förderphase des Kompressors vorliegt, kann bei dem noch weiter verbesserten Verfahren gemäß Figur 5 jederzeit auf der Grundlage eines vorliegenden Schubbetriebs in die Förderphase eingetreten werden, so lange dann zu überprüfende Druckvoraussetzungen vorliegen. Im Einzelnen: Gemäß Schritt S501 wird wiederum von einer Überwachung der Betriebsparameter ausgegangen. In Schritt S402 wird dann unabhängig von den vorliegenden Druckverhältnissen geprüft, ob Schubbetrieb vorliegt. Ist dies nicht der Fall, so werden weiterhin die Betriebsparameter gemäß Schritt S501 überwacht. Liegt jedoch Schubbetrieb vor, so wird im nächsten Schritt S503 die Abschaltdruckschwelle erhöht. Dann wird in Schritt S505 geprüft, ob der Systemdruck oberhalb des erhöhten Abschaltdruckes liegt. Ist dies der Fall, so wird gemäß Schritt S504 die Nichtförderphase des Kompressors aufrechterhalten. Liegt der Systemdruck jedoch unterhalb der erhöhten Abschaltdruckschwelle, so wird gemäß Schritt S506 in die Förderphase des Kompressors eingetreten, wobei diese durch zyklisches Durchlaufen der Schritte S505 und S506 so lange aufrechterhalten bleibt, bis der Systemdruck über dem erhöhten Abschaltdruck liegt. Dann wird in die Nichtförderphase des Kompressors gemäß Schritt S504 eingetreten, und die Überwachung der Betriebsparameter gemäß Schritt S501 wird fortgesetzt. Das gemäß Figur 5 dargestellte Verfahren kann nur parallel zu anderen Überwachungsverfahren eingesetzt werden. Es ist nämlich zusätzlich in jedem Fall erforderlich, die Druckzustände im Fahrzeug zu überwachen und auf dieser Grundlage eine Förderphase des Kompressors gegebenenfalls einzuleiten.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste:

- 10: Druckluftversorgungsanlage
- 12: Lufttrocknereinheit
- 14: Filtereinheit
- 16: Ventileinheit
- 18: Ventileinheit
- 18': Ventileinheit
- 20: Ablassventileinheit
- 20': Ablassventileinheit
- 22: Kompressor
- 24: Kupplung
- 26: Förderleitung
- 28: Mehrkreisschutzventileinheit
- 30: Kompressorkupplungsschaltventileinheit
- 32: Förderleitungsabschaltventileinheit
- 34: Steuereinheit
- 36: Temperatursensor
- 38: Drossel
- 40: Drossel
- 42: Rückschlagventil
- 44: Rückschlagventil
- 46: Rückschlagventil
- 48: Signalleitung
- 50: Signalleitung
- 52: Signalleitung
- 54: Signalleitung
- 56: Signaleinheit
- 58: Verbrennungsmotor
- 60: Ventilkammer
- 62: Druckluftbehälter
- 64: Steuerkolben
- 66: Steuerkolbenplatte
- 68: Steuerraum
- 70: Rückraum
- 72: Ventilgehäuse
- 74: Einschnürung
- 76: Regenerationsventilkammer
- 78: Ventilteller
- 80: Feder
- 82: Ablass
- 84: Dichtung
- 86: Dichtung
- 88: Dichtung
- 90: Dichtung
- 94: Steuerkolben
- 96: Kanal
- 98: Regenerationsventilkammer
- 100: Öffnung
- 102: Öffnung

## Patentansprüche

1. Ventileinrichtung für eine Druckluftversorgungsanlage (10), mit einem mit Druckluft beaufschlagbaren Steuerraum (68), einer den Steuerraum begrenzenden Steuerkolbenplatte (66), einem an der dem Steuerraum abgewandten Seite der Steuerkolbenplatte ansetzenden Steuerkolben (64), der in eine mit mindestens einem Druckluftanschluss versehene Ablassventilkammer (60) eines Ablassventils hineinragt, und einem die Ablassventilkammer begrenzenden Ventilteller (78), der von einer Feder (80) in Richtung eines Ventilsitzes mit Kraft beaufschlagbar und von dem Steuerkolben gegen die Kraft der Feder von dem Ventilsitz zum Öffnen des Ablassventils abhebbar ist, wobei der Steuerkolben und ein den Steuerkolben umgebendes Ventilgehäuse mindestens zwei Regenerationsventilkammern (76, 98) eines Regenerationsventils mit jeweils mindestens einem Druckluftanschluss definieren **dadurch gekennzeichnet, dass** die mindestens zwei Regenerationsventilkammern in Abhängigkeit der Position des Steuerkolbens entweder voneinander getrennt sind oder miteinander in Verbindung stehen.

2. Ventileinrichtung nach Anspruch 1, **dadurch gekennzeichnet, dass** die Regenerationsventilkammern (76, 98) bei geschlossenem Ablassventil voneinander getrennt sind und bei geöffnetem Ablassventil miteinander in Verbindung stehen.

3. Ventileinrichtung nach Anspruch 1 oder 2, **dadurch gekennzeichnet, dass** der Steuerkolben (64) mindestens eine Einschnürung (74) aufweist, die in einer ersten Position des Steuerkolbens vollständig in einer der Regenerationsventilkammern (98) liegt und einer zweiten Position des Steuerkolbens eine Verbindung zwischen den mindestens zwei Regenerationsventilkammern (98, 76) schafft.

4. Ventileinrichtung nach einem der vorhergehenden Ansprüche, **dadurch gekennzeichnet, dass** der durch seine Erstreckung zwischen der Steuerkolbenplatte (66) und der Ablassventilkammer (60) eine Achse definierende Steuerkolben (64) mindestens einen Kanal (96) mit mindestens zwei axial zueinander versetzten Kanalöffnungen (100, 102) aufweist, wobei die mindestens zwei axial zueinander versetzten Kanalöffnungen in einer ersten Position des Steuerkolbens in einer der Regenerationsventilkammern (98) liegen und einer zweiten Position des Steuerkolbens in verschiedenen Regenerationsventilkammern (98, 76) liegen, so dass der Kanal eine Verbindung zwischen den mindestens zwei Regenerationsventilkammern schafft.

5. Ventileinrichtung nach einem der vorhergehenden Ansprüche, **dadurch gekennzeichnet, dass** der Steuerkolben (64) von dem Ventilteller (78) getrennt ist.

6. Ventileinrichtung nach einem der Ansprüche 1 bis 4, **dadurch gekennzeichnet, dass** der Steuerkolben einstückig mit dem Ventilteller ausgebildet ist.

7. Ventileinrichtung nach einem der vorhergehenden Ansprüche, **dadurch gekennzeichnet, dass** die Ablassventilkammer (60) mindestens einen zweiten Druckluftanschluss aufweist.

8. Ventileinrichtung nach einem der vorhergehenden Ansprüche, **dadurch gekennzeichnet, dass** das Regenerationsventil und das Ablassventil in demselben Ventilgehäuse angeordnet sind.

9. Druckluftversorgungsanlage mit einer Ventileinrichtung nach Anspruch 1, wobei der Steuerraum von einem Magnetventil (18') ansteuerbar ist, der mindestens eine Druckluftanschluss der Ablassventilkammer mit einem Drucklufteingang einer Filtereinheit (14) verbunden ist und die Regenerationsventilkammern mit jeweils einem Anschluss eines Rückschlagventils (44) in Verbindung stehen, das mit einem Druckluftausgang der Filtereinheit verbunden ist.

10. Druckluftversorgungsanlage nach Anspruch 9, **dadurch gekennzeichnet, dass** ein zweiter Druckluftanschluss der Ablassventilkammer mit einer Druckluftquelle verbunden ist.

## Claims

1. Valve device for a compressed air supply system (10), having a control chamber (68) which can be charged with compressed air, having a control piston plate (66) which delimits the control chamber, having a control piston (64) which is attached to that side of the control piston plate which faces away from the control chamber, which control piston projects into a blow-off valve chamber (60), which is provided with at least one compressed air port, of a blow-off valve, and having a valve plate (18) which delimits the blow-off valve chamber and which can be acted on with force in the direction of a valve seat by a spring (80) and which can be lifted up from the valve seat, in order to open the blow-off valve, by the control piston counter to the force of the spring, with the control piston and a valve housing which surrounds the control piston defining at least two regeneration valve chambers (76, 98) of a regeneration valve with in each case at least one compressed air port, **characterized in that** the at least two regeneration valve chambers either are separated from one another or connected to one another as a function of the position of the control piston.

2. Valve device according to Claim 1, **characterized in that** the regeneration valve chambers (76, 98) are separated from one another when the blow-off valve is closed and are connected to one another when the blow-off valve is open.

3. Valve device according to Claim 1 or 2, **characterized in that** the control piston (64) has at least one constriction (74) which, in a first position of the control piston, is situated entirely within one of the regeneration valve chambers (98) and, in a second position of the control piston, creates a connection between the at least two regeneration valve chambers (98, 76).

4. Valve device according to one of the preceding claims, **characterized in that** the control piston (64), which defines an axis by means of its extent between the control piston plate (66) and the blow-off valve chamber (60), has at least one duct (96) with at least two duct openings (100, 102) situated axially offset with respect to one another, with the at least two duct openings which are situated axially offset with respect to one another being situated in one of the regeneration valve chambers (98) in a first position of the control piston and being situated in different regeneration valve chambers (98, 76), such that the duct creates a connection between the at least two regeneration valve chambers, in a second position of the control piston.

5. Valve device according to one of the preceding claims, **characterized in that** the control piston (64) is separate from the valve plate (78).

6. Valve device according to one of Claims 1 to 4, **characterized in that** the control piston is formed in one piece with the valve plate.

7. Valve device according to one of the preceding claims, **characterized in that** the blow-off valve chamber (60) has at least one second compressed air port.

8. Valve device according to one of the preceding claims, **characterized in that** the regeneration valve and the blow-off valve are arranged in the same valve housing.

9. Compressed air supply system having a valve device according to Claim 1, with it being possible for the control chamber to be activated by a solenoid valve (18'), with the at least one compressed air port of the blow-off valve chamber being connected to a compressed air inlet of a filter unit (14), and with the regeneration valve chambers being connected to in each case one port of a non-return valve (44) which is connected to a compressed air outlet of the filter unit.

10. Compressed air supply system according to Claim 9, **characterized in that** a second compressed air port of the blow-off valve chamber is connected to a compressed air source.

## Revendications

1. Dispositif à soupape pour un système (10) de fourniture d'air comprimé, comprenant un espace (68) de commande, qui peut être alimenté en air comprimé, un plateau (66) de piston de commande délimitant l'espace de commande, un piston (64) de commande, qui est mis du côté, éloigné de l'espace de commande, du plateau du piston de commande et qui pénètre dans une chambre (60), pourvue d'au moins un raccord pour de l'air comprimé, d'une soupape de décharge et un disque (78) de soupape, qui délimite la chambre de la soupape de décharge, qui peut être soumis à la force d'un ressort (80) dans la direction d'un siège de soupape et qui, pour ouvrir la soupape de décharge, peut être soulevé du siège de la soupape par le piston de commande à l'encontre de la force du ressort, le piston de commande et un corps de soupape, entourant le piston de commande, définissant au moins deux chambres (76, 98) d'une soupape de régénération ayant chacune au moins un raccord pour de l'air comprimé,
**caractérisé en ce que** les au moins deux chambres de la soupape de régénération sont, en fonction de la position du piston de commande, séparées l'une de l'autre ou en communication l'une avec l'autre.

2. Dispositif à soupape suivant la revendication 1,
**caractérisé en ce que** les chambres (76, 98) de la soupape de régénération sont, lorsque la soupape de décharge est fermée, séparées l'une de l'autre et, lorsque la soupape de décharge est ouverte, en communication l'une avec l'autre.

3. Dispositif à soupape suivant la revendication 1 ou 2,
**caractérisé en ce que** le piston (64) de commande a au moins une gorge (74), qui, dans une première position du piston de commande, se trouve complètement dans l'une des chambres (98) de la soupape de régénération et, dans une deuxième position du piston de commande, ménage une communication entre les au moins deux chambres (98, 76) de la soupape de régénération.

4. Dispositif à soupape suivant l'une des revendications précédentes, **caractérisé en ce que** le piston (64) de commande, définissant un axe par son étendue entre le plateau (66) du piston de commande et la chambre (60) de la soupape de décharge, a au moins un canal (96), ayant au moins deux ouvertures (100, 102) décalées axialement l'une de l'autre, les au moins deux ouvertures du canal, décalées axialement l'une de l'autre, se trouvant, dans une première position du piston de commande, dans l'une des chambre (98) de la soupape de régénération et, dans une deuxième position du piston de commande, dans des chambres (98, 76) différentes de la soupape de régénération, de sorte que le canal ménage une communication entre les au moins deux chambres de la soupape de régénération.

5. Dispositif à soupape suivant l'une des revendications précédentes, **caractérisé en ce que** le piston (64) de commande est séparé du disque (78) de la soupape.

6. Dispositif à soupape suivant l'une des revendications 1 à 4, **caractérisé en ce que** le piston de commande est constitué d'une seule pièce avec le disque de la soupape.

7. Dispositif à soupape suivant l'une des revendications précédentes, **caractérisé en ce que** la chambre (60) de la soupape de décharge a au moins un deuxième raccord pour de l'air comprimé.

8. Dispositif à soupape suivant l'une des revendications précédentes, **caractérisé en ce que** la soupape de régénération et la soupape de décharge sont disposées dans le même corps de soupape.

9. Système de fourniture d'air comprimé, ayant un dispositif à soupape suivant la revendication 1, dans lequel l'espace de commande peut être commandé par une électrovanne (18'), qui met au moins un raccord pour de l'air comprimé de la chambre de la soupape de décharge en communication avec une entrée pour de l'air comprimé d'une unité (14) de filtre et les chambres de la soupape de régénération communiquent avec respectivement un raccord d'un clapet (44) anti-retour, qui communique avec une sortie pour de l'air comprimé de l'unité de filtre.

10. Système de fourniture d'air comprimé suivant la revendication 9, **caractérisé en ce qu'**un deuxième raccord pour de l'air comprimé de la chambre de la soupape de décharge communique avec une source d'air comprimé.
